(19) Europäisches Patentamt
European Patent Office
Office européen des brevets

(11) Veröffentlichungsnummer: **0 028 744**
**B1**

(12) # EUROPÄISCHE PATENTSCHRIFT

(45) Veröffentlichungstag der Patentschrift: **16.03.83**

(51) Int. Cl.³: **C 01 B 25/00**

(21) Anmeldenummer: **80106517.8**

(22) Anmeldetag: **24.10.80**

(54) **Stabilisierter roter Phosphor sowie Verfahren zu seiner Herstellung.**

(30) Priorität: **08.11.79 DE 2945118**

(43) Veröffentlichungstag der Anmeldung: **20.05.81 Patentblatt 81/20**

(45) Bekanntmachung des Hinweises auf die Patenterteilung: **16.03.83 Patentblatt 83/11**

(84) Benannte Vertragsstaaten: **DE GB IT SE**

(56) Entgegenhaltungen:
**DE-A-2 622 296**
**DE-A-2 705 042**
**DE-B-1 567 629**
**DE-B-2 625 674**
**DE-C-2 655 739**
**US-A-2 359 243**
**US-A-2 635 953**
**US-A-4 145 369**

**GMELINS HANDBUCH DER ANORGANISCHEN CHEMIE, 8. Auflage, Phosphor, Teil B, 1964, VERLAG CHEMIE, Weinheim/Bergstr.**

(73) Patentinhaber: **HOECHST AKTIENGESELLSCHAFT, Postfach 80 03 20, D-6230 Frankfurt/Main 80 (DE)**

(72) Erfinder: **Staendeke, Horst, Dr., von-Meer-Strasse 15, D-5042 Erftstadt (DE)**
Erfinder: **Adam, Wilhelm, Dr., Schwalbenstrasse 15, D-6078 Neuisenburg II (DE)**
Erfinder: **Dany, Franz-Josef, Dr., Heddinghovener Strasse 47, D-5042 Erftstadt (DE)**
Erfinder: **Kandler, Joachim, Dr., Amselweg 10, D-5042 Erftstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Stabilisierter roter Phosphor sowie Verfahren zu seiner Herstellung

Die Erfindung betrifft stabilisierten, pulverförmigen roten Phosphor, wobei die Oberfläche der roten Phosphorteilchen mit einer dünnen Schicht von Oxidationsstabilisatoren bedeckt ist sowie ein Verfahren zu seiner Herstellung.

Bekanntlich findet in feuchter Atmosphäre an der Oberfläche von rotem Phosphor eine chemische Reaktion statt, bei der durch Oxidation und Disproportionierung verschiedene Säuren des Phosphors der Oxidationsstufen +1 bis +5 und Phosphorwasserstoff gebildet werden.

Zur Stabilisierung des roten Phosphors wird gemäss Gmelins Handbuch der anorganischen Chemie, 8. Auflage (1964), Band Phosphor, Teil B, Seite 83, Verlag Chemie, Weinheim/Bergstrasse, Aluminiumhydroxid vorgeschlagen. Letzteres wird durch aufeinanderfolgenden Zusatz von auf 55-60°C erwärmten wässerigen 10%igen Lösungen von Natriumhydrogencarbonat und Aluminiumsulfat auf den Phosphorteilchen ausgefällt. Die wässerige Suspension wird dann filtriert und der Filterrückstand getrocknet. Diese Verfahrensweise besitzt den Nachteil, dass zur Erzielung eines ausreichenden Stabilisierungseffektes unerwünscht grosse Mengen Aluminiumhydroxid angewandt werden müssen, so dass der Phosphor im Hinblick auf seine weitere Verwendung in seinen verschiedensten Anwendungsbereichen in einem nicht tolerierbaren Masse verunreinigt wird.

Ein anderes Verfahren zur Stabilisierung von rotem Phosphor, wie es in der USA-Patentschrift 2 359 243 beschrieben wird, sieht vor, den roten Phosphor in einer wässerigen 0,04 normalen Lösung von Natriumaluminat zu suspendieren, wonach während 10 Stunden Luft bei 85-90°C durch die Suspension geleitet, filtriert, mit heissem Wasser gewaschen und im Vakuum getrocknet wird.

Schliesslich ist es aus der USA-Patentschrift 2 635 953 bekannt, zur Stabilisierung von rotem Phosphor ausser Aluminiumhydroxid auch Zink- oder Magnesiumhydroxid zu verwenden.

Die letztgenannten bekannten Verfahren sind ebenfalls nicht geeignet, mit einem Minimum an Stabilisator ein befriedigendes Ausmass an Stabilisierung des roten Phosphors gegen Oxidation zu gewährleisten. Die bekannten Oxidationsstabilisatoren besitzen nämlich den Nachteil, dass sie nicht ausreichend thermostabil sind, weil sie bei höheren Temperaturen Wasser abspalten. Bei der Verarbeitung von mit rotem Phosphor als Flammschutzmittel ausgestatteten Kunststoffen im Extruder, wobei der rote Phosphor seinerseits einen Oxidationsstabilisator enthält, ist es jedoch unerlässlich, dass der Oxidationsstabilisator thermostabil ist und selbst bei Temperaturen von über 300°C kein Wasser abspaltet oder sich zersetzt.

Dieser zuletzt genannte Nachteil trifft auch für das Stabilisierungsverfahren zu, das in der DE-A-26 22 296 beschrieben wird. Der Stabilisierungseffekt wird in diesem Falle dadurch erreicht, dass geringe Mengen von Metallsalzen verschiedener saurer Orthophosphorsäureester auf die Oberfläche des roten Phosphors aufgefällt werden.

Eine für eine Reihe von Einsatzgebieten unzureichende Oxidationsstabilität ergibt sich bei der Verwendung von Metallsalzen der Orthophosphorsäure gemäss DE-A-26 31 532 als Stabilisator.

Der Einsatz von Metallsalzen von Phosphonsäuren und Phosphinsäuren gemäss DE-A-26 47 093 bzw. DE-A-26 32 296 bringt zwar eine gute Thermo- und Oxidationsstabilität, jedoch sind hierfür etwa 3-5 Gew.% der relativ teueren Phosphon- bzw. Phosphinsäure nötig.

Eine wirksame Verbesserung der Oxidationsstabilität von rotem Phosphor kann auch entsprechend der DE-C-26 55 739 und DE-A-27 05 042 durch Aufbringen einer dünnen Schicht eines Melamin/Formaldehyd-Harzes auf die Oberfläche der roten Phosphorteilchen erzielt werden. Diese Stabilisatoren erwiesen sich jedoch insofern als unbefriedigend, als der Stabilisierungseffekt bei Lagerung des stabilisierten Phosphors unter tropischen Bedingungen, d.h. bei 50°C und 100% relativer Luftfeuchte, wie sie im modifizierten Indian Standard-Test (IS 2012 - 1961) simuliert werden, weitgehend verloren geht.

Schliesslich offenbart die DE-C-2 625 674 ein Mittel, das den Einsatz von rotem Phosphor in Kunststoff ermöglicht, ohne dass aufgrund der Verarbeitungstemperaturen des Kunststoffes und der Anwesenheit von geringen Mengen Wasser oder Feuchtigkeit in dem zu verarbeitenden Kunststoff Phosphorwasserstoff freigesetzt wird. Das Mittel umfasst Epoxidharze, welche die Phosphorteilchen umhüllen, wobei der Anteil der Harze 5-50 Gew.% beträgt.

Es wurde nunmehr überraschend gefunden, dass die Stabilisierung des roten Phosphors verbessert werden kann, wenn man anstelle eines Epoxidharzes ein Gemisch aus einem Epoxidharz und Aluminiumhydroxid verwendet, das in dünner Schicht den roten Phosphor oberflächlich bedeckt.

Der Gegenstand der Erfindung betrifft somit stabilisierten, pulverförmigen roten Phosphor, bestehend aus Phosphorteilchen mit einer Teilchengrösse von höchstens 2 mm und einem Oxidationsstabilisator, welcher die Phosphorteilchen in Form einer dünnen Schicht umhüllt, welcher dadurch gekennzeichnet, ist, dass

a) der Oxidationsstabilisator eine Kombination aus Aluminiumhydroxid und einem gehärteten Epoxidharz mit einem Epoxid-Äquivalentgewicht von 170 bis 500 ist,

b) die Gesamtmenge des Oxidationsstabilisators, bezogen auf die Menge des roten Phosphors, 0,1-5 Gew.% beträgt, und

c) der Aluminiumhydroxidanteil im roten Phosphor sich auf 0,01 bis 3 Gew.% und der Epoxidharz-Anteil sich auf 0,09 bis 4,99 Gew.%, jeweils bezogen auf die Menge des roten Phosphors, beläuft.

Nach einer bevorzugten Ausführungsform der Erfindung stellt das Epoxidharz ein Epoxid-Phenolharz, wie z.B. das Umsetzungsprodukt aus Epichlorhydrin und 2,2-Bis-(4-hydroxyphenyl)-propan (Bisphenol A) oder einen Epoxidharzester dar.

Ein weiterer Gegenstand der Erfindung betrifft das Verfahren zur Herstellung des stabilisierten, pulverförmigen roten Phosphors, welches dadurch gekennzeichnet ist, dass man in eine wässerige Suspension des roten Phosphors ein wasserlösliches Aluminiumsalz sowie eine wässerige oder alkoholische Lösung oder Dispersion eines Epoxidharzes und eines Härters einträgt, das Gemisch nach Einstellen eines pH-Wertes von 5 bis 9 während 1 bis 3 Stunden bei einer Temperatur von 20 bis 90°C unter Ausfällung des Aluminiumhydroxides und gleichzeitiger Härtung des Epoxidharzes rührt und schliesslich den stabilisierten Phosphor nach Filtration bei erhöhter Temperatur trocknet.

Es hat sich als zweckmässig erwiesen, als Harzkomponente

a) flüssige Epoxidharze mit sehr niedriger bis mittlerer Viskosität, die 100%ig reaktiv sind und mit wasserlöslichen oder wasseremulgierbaren, Härtern härtbar sind, oder

b) unmodifizierte, flüssige, 100%ig reaktive Reaktionsprodukte aus Epichlorhydrin und Bisphenol A, die mit wasserlöslichen oder wasseremulgierbaren Härtern härtbar sind, oder

c) eine wässerige Epoxid-Phenolharz-Dispersion oder wasseremulgierbare, 100%ig reaktive Epoxidharzester, die mit wasserlöslichen oder wasseremulgierbaren Härtern härtbar sind einzusetzen.

Die Härtung der Epoxidharze erfolgt in herkömmlicher Weise z.B. in wässeriger Phase bei einer Temperatur von 20–90°C und unter Einhaltung eines pH-Wertes der wässerigen Phase von 5–9, wobei als Härter wasserlösliche, intern modifizierte Polyamine oder wasseremulgierbare Polyaminoamide verwendet werden können.

Der nach der Erfindung stabilisierte rote Phosphor sowie das Verfahren zu seiner Herstellung sind als technisch fortschrittlich zu bezeichnen, da das Stabilisierungsmittel thermostabil und ausserdem so wirksam ist, dass bereits der Zusatz sehr kleiner Mengen dem roten Phosphor für viele Anwendungsgebiete eine ausreichende Stabilität verleiht.

Die Erfindung wird durch die nachfolgenden Beispiele näher erläutert:

Beispiel 1

500 ml einer wässerigen Phosphorsuspension mit einem Gehalt von 250 g pulverförmigem rotem Phosphor wurden mit 250 ml Wasser verdünnt, durch Zugabe von 5%iger $H_2SO_4$ auf einen pH-Wert von 4 eingestellt und auf 60°C erwärmt. Nach Eintropfen einer Lösung von 5,3 g $Al_2(SO_4)_3 \cdot 18\ H_2O$ in 50 ml Wasser sowie einer Emulsion von 1,0 g eines flüssigen, sehr niedrigviskosen Epoxidharzes A (®Beckopox EP 128 der Firma Hoechst Aktiengesellschaft, Frankfurt/Main) mit einem Epoxidäquivalentgewicht von ca. 200 und einer Dichte bei 25°C von 1,12 g/ml und 1,0 g eines in Wasser gelösten, intern modifizierten aliphatischen Polyaminhärters (®Beckopox VEH 2130 der Firma Hoechst Aktiengesellschaft, Frankfurt/Main) mit einem H-Äquivalentgewicht von ca. 200 und einer Dichte bei 25°C von 1,10 g/ml in 50 ml Wasser, wurde die Suspension durch Zugabe von 5 gew.%iger Natronlauge auf einen pH-Wert von 5 eingestellt. Die Suspension wurde anschliessend 1 Stunde bei 60°C gerührt, dann mit 5 gew.%iger Natronlauge auf einen pH-Wert von 7 eingestellt. Nach Ablauf einer Nachrührzeit von 15 Minuten wurde filtriert, der Filterrückstand mit Wasser gewaschen und bei 100°C im Stickstoffstrom getrocknet. Der Anteil des Aluminiumhydroxides im getrockneten roten Phosphor betrug 0,46 Gew.% und der Epoxidharzanteil 0,68 Gew.%, bezogen auf die Menge des eingesetzten roten Phosphors.

Die Prüfung der Oxidationsstabilität des so stabilisierten roten Phosphors erfolgte nach den nachfolgend beschriebenen zwei Testverfahren.

Test 1

In einem mit Gaseinleitrohr, Thermometer, Rückflusskühler und Magnetrührer ausgestatteten Dreihalskolben wurden 450 ml Wasser und 1 g des präparierten roten Phosphors vorgelegt, das Gemisch auf 80°C erwärmt und unter gleichzeitigem Rühren 10 Liter Sauerstoff pro Stunde in das Gemisch eingeleitet. Das über den Rückflusskühler entweichende Gasgemisch aus Sauerstoff und Phosphorwasserstoff, der durch Disproportionierung des roten Phosphors neben Säuren des Phosphors verschiedener Oxidationsstufen entstanden war, wurde durch zwei nachgeschaltete Waschflaschen geleitet, welche jeweils mit 100 ml einer 2,5 gew.%igen wässerigen Quecksilber(II)-chloridlösung beschickt waren.

Hierbei reagierte der Phosphorwasserstoff mit dem Quecksilber(II)-chlorid gemäss folgender Reaktionsgleichung:

$$PH_3 + 3\,HgCl_2 \rightarrow P(HgCl)_3 + HCl$$

Als Mass für die Oxidationsstabilität des roten Phosphors diente einmal die Menge der in der wässerigen Suspension des roten Phosphors enthaltenen Oxosäuren des Phosphors sowie die in den Gaswaschflaschen enthaltene Salzsäure. Die Gehalte an Phosphorsäuren und Salzsäure wurden titrimetrisch ermittelt. Die daraus berechneten Werte sind in der Tabelle 1, Spalten A und B dargestellt. Spalte A gibt die bei der Oxidation des roten Phosphors entstandenen Mengen an $PH_3$ (mg $PH_3$ pro Gramm Phosphor pro Stunde)

wieder. Die Werte in Spalte B sind ein Mass für die Azidität der wässerigen phosphorhaltigen Suspension, verursacht durch die Bildung von Phosphorsäuren bei der Oxidation des Phosphors (mg KOH pro Gramm Phosphor pro Stunde).

Test 2

Die Bestimmung der Oxidationsstabilität wurde in Anlehnung an Indian Standard «Specification of red phosphorus» (IS 2012-1961) durchgeführt.

Hierzu wurden 5,0 g roter Phosphor in eine Kristallisierschale mit einem Durchmesser von 50 mm eingewogen und die Schale in einem geschlossenen Glasgefäss 168 Stunden bei 50°C und 100% relativer Luftfeuchtigkeit gelagert. Der hierbei gebildete Phosphorwasserstoff wurde durch einen Luftstrom (10 l/h) aus dem Glasgefäss ausgetrieben, in einer Gaswaschflasche mit 2,5 gew.%iger Quecksilber(II)-chloridlösung zur Reaktion gebracht und die Menge der dabei entstandenen Salzsäure titrimetrisch bestimmt.

Zur Bestimmung des Gehaltes an den verschiedenen Oxosäuren des Phosphors wurde die Phosphorprobe in ein 250 ml-Becherglas übergeführt, mit 120 ml Wasser und 40 ml n-Propanol versetzt, 10 Minuten zum Sieden erhitzt und anschliessend filtriert. Im Filtrat erfolgte dann die massanalytische Bestimmung der Oxosäuren durch Titration mit 0,1 n NaOH bis zum Äquivalenzpunkt für die 2. Titrationsstufe bei pH 9,5.

Die daraus berechneten Werte sind in der Tabelle 2 dargestellt.

Beispiel 2

Es wurde analog Beispiel 1 verfahren, wobei jedoch 10,6 g Aluminiumsulfat eingesetzt wurden. Der Aluminiumhydroxidanteil im getrockneten roten Phosphor betrug 0,92 Gew.%, der Epoxidharzanteil 0,67 Gew.%. Die Werte für die Oxidationsstabilität des auf diese Weise präparierten roten Phosphors sind in den Tabellen 1 und 2 dargestellt.

Beispiel 3

Es wurde analog Beispiel 1 verfahren, wobei jedoch 1,1 g Aluminiumsulfat eingesetzt wurden. Der Aluminiumhydroxidanteil im getrockneten roten Phosphor betrug 0,10 Gew.%, der Epoxidharzanteil 0,72 Gew.%. Die Werte für die Oxidationsstabilität des auf diese Weise präparierten roten Phosphors sind in den Tabellen 1 und 2 dargestellt.

Beispiel 4

Es wurde analog Beispiel 1 verfahren, wobei jedoch 1,1 g Aluminiumsulfat und jeweils 0,5 g Epoxidharz A und Härter eingesetzt wurden. Der Aluminiumhydroxidanteil im getrockneten roten Phosphor betrug 0,11 Gew.%, der Epoxidharzanteil 0,37 Gew.%. Die Werte für die Oxidationsstabilität des auf diese Weise präparierten roten Phosphors sind in den Tabellen 1 und 2 dargestellt.

Beispiel 5

Es wurde analog Beispiel 1 verfahren, wobei jedoch 1,0 g eines flüssigen, sehr niedrig-viskosen Epoxidharzes B (®Beckopox VEP 22 der Firma Hoechst Aktiengesellschaft, Frankfurt/Main) mit einem Epoxidäquivalentgewicht von ca. 195 und einer Dichte bei 25°C von 1,11 g/ml sowie 1,0 g des Härters gemäss Beispiel 1 eingesetzt wurden. Der Aluminiumhydroxidanteil im getrockneten roten Phosphor betrug 0,46 Gew.%, der Epoxidharzanteil 0,67 Gew.%. Die Werte für die Oxidationsstabilität des auf diese Weise präparierten roten Phosphors sind in den Tabellen 1 und 2 dargestellt.

Beispiel 6

Es wurde analog Beispiel 5 verfahren, wobei jedoch 10,6 g Aluminiumsulfat eingesetzt wurden. Der Aluminiumhydroxidanteil im getrockneten roten Phosphor betrug 0,94 Gew.%, der Epoxidanteil 0,68 Gew.%. Die Werte für die Oxidationsstabilität des auf diese Weise präparierten roten Phosphors sind in den Tabellen 1 und 2 dargestellt.

Beispiel 7

Es wurde analog Beispiel 5 verfahren, wobei jedoch 1,1 g Aluminiumsulfat eingesetzt wurden. Der Aluminiumhydroxidanteil im getrockneten roten Phosphor betrug 0,11 Gew.%, der Epoxidharzanteil 0,74 Gew.%. Die Werte für die Oxidationsstabilität des auf diese Weise präparierten roten Phosphors sind in den Tabellen 1 und 2 dargestellt.

Beispiel 8

Es wurde analog Beispiel 5 verfahren, wobei jedoch 1,1 g Aluminiumsulfat und jeweils 0,5 g Epoxidharz B und Härter eingesetzt wurden. Der Aluminiumhydroxidanteil im getrockneten roten Phosphor betrug 0,11 Gew.%, der Epoxidharzanteil 0,36 Gew.%. Die Werte für die Oxidationsstabilität des auf diese Weise präparierten roten Phosphors sind in den Tabellen 1 und 2 dargestellt.

Beispiel 9 (Vergleichsbeispiel)

Es wurde analog Beispiel 1 verfahren, wobei jedoch kein Aluminiumsulfat eingesetzt wurde. Der Epoxidharzanteil im getrockneten roten Phosphor betrug 0,74 Gew.%. Die Werte für die Oxidationsstabilität des auf diese Weise präparierten roten Phosphors sind in den Tabellen 1 und 2 dargestellt.

Beispiel 10 (Vergleichsbeispiel)

Es wurde analog Beispiel 5 verfahren, wobei jedoch kein Aluminiumsulfat eingesetzt wurde. Der Epoxidharzanteil im getrockneten roten Phosphor betrug 0,70 Gew.%. Die Werte für die Oxidationsstabilität des auf diese Weise präparierten roten Phosphors sind in den Tabellen 1 und 2 dargestellt.

Beispiel 11 (Vergleichsbeispiel)

Es wurde analog Beispiel 1 verfahren, wobei jedoch weder Epoxidharz noch Epoxidhärter eingesetzt wurden. Der Aluminium-hydroxidanteil im getrockneten roten Phosphor betrug 0,48 Gew.%. Die Werte für die Oxidationsstabilität des auf diese Weise präparierten roten Phosphors sind in den Tabellen 1 und 2 dargestellt.

Beispiel 12 (Vergleichsbeispiel)

Es wurde analog Beispiel 2 verfahren, wobei jedoch weder Epoxidharz noch Epoxidhärter eingesetzt wurden. Der Aluminiumhydroxidanteil im getrockneten roten Phosphor betrug 0,92 Gew.%. Die Werte für die Oxidationsstabilität des auf diese Weise präparierten roten Phosphors sind in den Tabellen 1 und 2 dargestellt.

Aus den Angaben der Tabellen 1 und 2 geht hervor, dass der erfindungsgemässe Aluminiumhydroxid/Epoxidharz-Stabilisator in der Lage ist, mit einer geringen Gesamtmenge an Stabilisator einen besseren Stabilisierungseffekt zu erzielen als beim alleinigen Einsatz von Aluminiumhydroxid oder Epoxidharz.

Tabelle 1

| Beispiel | Stabilisator (Gew.%) | Gesamtmenge Stabilisator (Gew.%) | A (mg $PH_3$/g × Std.) | B (mg KOH/g × Std.) |
|---|---|---|---|---|
| 1 | 0,46% $Al(OH)_3$<br>0,68% Epoxidharz A | 1,14 | 0,04 | 0,8 |
| 2 | 0,92% $Al(OH)_3$<br>0,67% Epoxidharz A | 1,59 | 0,04 | 0,7 |
| 3 | 0,10% $Al(OH)_3$<br>0,72% Epoxidharz A | 0,82 | 0,04 | 0.8 |
| 4 | 0,11% $Al(OH)_3$<br>0,37% Epoxidharz A | 0,48 | 0,06 | 1,0 |
| 5 | 0,46% $Al(OH)_3$<br>0,67% Epoxidharz B | 1,13 | 0,06 | 0,9 |
| 6 | 0,94% $Al(OH)_3$<br>0,68% Epoxidharz B | 1,62 | 0,05 | 0,9 |
| 7 | 0,11% $Al(OH)_3$<br>0,74% Epoxidharz B | 0,85 | 0,05 | 0,8 |
| 8 | 0,11% $Al(OH)_3$<br>0,36% Epoxidharz B | 0,47 | 0,06 | 0,9 |
| 9 | 0,74% Epoxidharz A | 0,74 | 0,17 | 2,7 |
| 10 | 0,70% Epoxidharz B | 0,70 | 0,16 | 2,5 |
| 11 | 0,48% $Al(OH)_3$ | 0,48 | 0,72 | 7,6 |
| 12 | 0,92% $Al(OH)_3$ | 0,92 | 0,76 | 10,5 |

Tabelle 2

| Beispiel | Stabilisator (Gew.%) | Gesamtmenge Stabilisator (Gew.%) | $H_3PO_4$ (Gew.%) | $PH_3$ (mg/g) |
|---|---|---|---|---|
| 1 | 0,46 Gew.% $Al(OH)_3$<br>0,48 Gew.% Epoxidharz A | 1,14 | 0,12 | <0,02 |
| 2 | 0,92 Gew.% $Al(OH)_3$<br>0,67 Gew.% Epoxidharz A | 1,59 | 0,05 | <0,02 |
| 3 | 0,10 Gew.% $Al(OH)_3$<br>0,72 Gew.% Epoxidharz A | 0,82 | 0,28 | <0,02 |
| 4 | 0,11 Gew.% $Al(OH)_3$<br>0,37 Gew.% Epoxidharz A | 0,48 | 0,27 | <0,02 |
| 5 | 0,46 Gew.% $Al(OH)_3$<br>0,67 Gew.% Epoxidharz B | 1,13 | 0,11 | <0,02 |
| 6 | 0,94 Gew.% $Al(OH)_3$<br>0,68 Gew.% Epoxidharz B | 1,62 | 0,06 | <0,02 |
| 7 | 0,11 Gew.% $Al(OH)_3$<br>0,74 Gew.% Epoxidharz B | 0,85 | 0,20 | <0,02 |
| 8 | 0,11 Gew.% $Al(OH)_3$<br>0,36 Gew.% Epoxidharz B | 0,47 | 0,31 | <0,02 |

Tabelle 2 (Fortsetzung)

| Beispiel | Stabilisator (Gew.%) | Gesamtmenge Stabilisator (Gew.%) | $H_3PO_4$ (Gew.%) | $PH_3$ (mg/g) |
|---|---|---|---|---|
| 9 | 0,74 Gew.% Epoxidharz A | 0,74 | 0,56 | <0,02 |
| 10 | 0,70 Gew.% Epoxidharz B | 0,70 | 0,62 | 0,02 |
| 11 | 0,48 Gew.% $Al(OH)_3$ | 0,48 | 5,84 | 1,6 |
| 12 | 0,92 Gew.% $Al(OH)_3$ | 0,92 | 2,99 | 0,6 |

**Patentansprüche**

1. Stabilisierter, pulverförmiger roter Phosphor, bestehend aus Phosphorteilchen mit einer Teilchengrösse von höchstens 2 mm und einem Oxidationsstabilisator, welcher die Phosphorteilchen in Form einer dünnen Schicht umhüllt, dadurch gekennzeichnet, dass

a) der Oxidationsstabilisator eine Kombination aus Aluminiumhydroxid und einem gehärteten Epoxidharz mit einem Epoxid-Äquivalentgewicht von 170 bis 500 ist,

b) die Gesamtmenge des Oxidationsstabilisators, bezogen auf die Menge des roten Phosphors, 0,1-5 Gew.% beträgt, und

c) der Aluminiumhydroxidanteil sich auf 0,01 bis 3 Gew.% und der Epoxidharz-Anteil sich auf 0,09 bis 4,99 Gew.%, jeweils bezogen auf die Menge des roten Phosphors, beläuft.

2. Roter Phosphor nach Anspruch 1, dadurch gekennzeichnet, dass das Epoxidharz ein Epoxid-Phenolharz ist.

3. Roter Phosphor nach Anspruch 1 oder 2, dadurch gekennzeichnet, dass das Epoxidharz das Umsetzungsprodukt aus Epichlorhydrin und 2,2-Bis-(4-hydroxyphenyl)-propan (Bisphenol A) ist.

4. Roter Phosphor nach Anspruch 1, dadurch gekennzeichnet, dass das Epoxidharz ein Epoxidharzester ist.

5. Verfahren zur Herstellung des stabilisierten, pulverförmigen roten Phosphors nach Anspruch 1-4, dadurch gekennzeichnet, dass man in eine wässerige Suspension des roten Phosphors ein wasserlösliches Aluminiumsalz sowie eine wässerige oder alkoholische Lösung oder Dispersion eines Epoxidharzes und eines Härters einträgt, das Gemisch nach Einstellen eines pH-Wertes von 5 bis 9 während 1 bis 3 Stunden bei einer Temperatur von 20 bis 90°C unter Ausfällung des Aluminiumhydroxides und gleichzeitiger Härtung des Epoxidharzes rührt und schliesslich den stabilisierten Phosphor nach Filtration bei erhöhter Temperatur trocknet.

6. Verfahren nach Anspruch 5, dadurch gekennzeichnet, dass man als Epoxidharz flüssige Epoxidharze mit sehr niedriger bis mittlerer Viskosität, die 100%ig reaktiv sind und mit wasserlöslichen oder wasseremulgierbaren Härtern härtbar sind, einsetzt.

7. Verfahren nach Anspruch 5, dadurch gekennzeichnet, dass man als Epoxidharz unmodifizierte, flüssige, 100%ig reaktive Reaktionsprodukte aus Epichlorhydrin und Bisphenol A, die mit wasserlöslichen oder wasseremulgierbaren Härtern härtbar sind, einsetzt.

8. Verfahren nach Anspruch 5, dadurch gekennzeichnet, dass man als Epoixdharz eine wässrige Epoxid-Phenolharz-Dispersion oder wasseremulgierbare, 100%ig reaktive Epoxidharzester, die mit wasserlöslichen oder wasseremulgierbaren Härtern härtbar sind, einsetzt.

9. Verfahren nach Anspruch 5-8, dadurch gekennzeichnet, dass man als Härter wasserlösliche, intern modifizierte Polyamine oder wasseremulgierbare Polyaminoamide verwendet.

10. Verfahren nach Anspruch 5-9, dadurch gekennzeichnet, dass man die Härtung der Epoxidharze in wässriger Phase bei einer Temperatur von 20-90°C und einem pH-Bereich von 5-9 durchführt.

**Claims**

1. Stabilized, pulverulent red phosphorus consisting of phosphorus particles having a particle size of at most 2 mm, and an oxidation stabilizer which envelops the phosphorus particles in the form of a thin layer, characterized in that

a) the oxidation stabilizer is a combination of aluminium hydroxide and a hardend epoxide resin having an epoxide equivalent weight of 170 to 500,

b) the total proportion of oxidation stabilizer is 0.1-5% by weight, based on the amount of red phosphorus, and

c) the aluminium hydroxide proportion is 0.01 to 3% by weight, and the epoxide resin proportion is 0.09 to 4.99% by weight, the percentages being in each case based on the amount of the red phosphorus.

2. Red phosphorus as claimed in claim 1, wherein the epoxide resin is an epoxide-phenol resin.

3. Red phosphorus as claimed in claim 1 or 2, wherein the epoxide resin is the reaction product of epichlorohydrin and 2,2-bis-(4-hydroxyphenyl)-propane (bisphenol A).

4. Red phosphorus as claimed in claim 1, wherein the epoxide resin is an epoxide resin ester.

5. Process for the manufacture of the stabiliezd pulverulent red phosphorus as claimed in claims 1 to 4, wherein a water-soluble aluminium

salt and an aqueous or alcoholic solution or dispersion of an epoxide resin and of a hardener are introduced into an aqueous suspension of the red phosphorus, a pH-value of 5 to 9 is established, the mixture is then stirred for 1 to 3 hours at a temperature of 20 to 90°C, with precipitation of the aluminium hydroxide and simultaneous hardening of the epoxide resin, and the stabilized phosphorus is filtered and finally dried at elevated temperature.

6. Process as claimed in claim 5, wherein a liquid epoxide resin which has a very low to medium viscosity, is 100% reactive and is hardenable with a water-soluble or water-emulsifiable hardener is used as the epoxide resin.

7. Process as claimed in claim 5, wherein an unmodified liquid 100% reactive reaction product of epichlorohydrin and bisphenol A, which is hardenable with a water-soluble or water-emulsifiable hardener is used as the epoxide resin.

8. Process as claimed in claim 5, wherein an aqueous epoxide-phenol resin dispersion or water-emulsifiable 100% reactive epoxide resin esters, which are hardenable with water-soluble or water-emulsifiable hardeners is used as epoxide resin.

9. Process as claimed in claims 5 to 8, wherein water-soluble, internally modified polyamines or water-emulsifiable polyaminoamides are used as hardeners.

10. Process as claimed in claims 5 to 9, wherein the epoxide resins are hardened in aqueous phase at a temperature of 20–90°C and at a pH range of 5–9.

**Revendications**

1. Phosphore rouge pulvérulent stabilisé consistant en particules de phosphore d'une grosseur égale à 2 mm au maximum et un stabilisant d'oxydation qui enveloppe les particules de phosphore sous forme d'une couche mince, caractérisé en ce que:

a) le stabilisant d'oxydation est une combinaison d'hydroxyde d'aluminium et d'une époxyde durcie ayant un poids équivalent d'époxyde de 170 à 500,

b) la quantité totale du stabilisant d'oxydation est égale à 0,1 à 5% en poids, par rapport à la quantité de phosphore rouge et

c) la quantité d'hydroxyde d'aluminium est égale à 0,01 à 3% en poids et la quantité d'époxyde est égale à 0,09 à 4,99% en poids, les pourcentages étant chaque fois rapportés à la quantité de phosphore rouge.

2. Phosphore rouge selon la revendication 1, caractérisé en ce que l'époxyde est une résine phénol-époxyde.

3. Phosphore rouge selon la revendication 1 ou 2, caractérisé en ce que l'époxyde est le produit de réaction de l'épichlorhydrine et du 2,2-bis-(4-hydroxyphényl)-propane (bisphénol A).

4. Phosphore rouge selon la revendication 1, caractérisé en ce que l'époxyde est un ester époxydique.

5. Procédé de préparation du phosphore rouge pulvérulent stabilisé selon les revendications 1 à 4, caractérisé en ce que l'on introduit un sel d'aluminium hydrosoluble et une solution ou dispersion alcoolique ou aqueuse d'une époxyde et d'un durcissant dans une suspension aqueuse de phosphore rouge, on établit une valeur pH de 5 à 9, on agite ensuite le mélange pendant 1 à 3 h à une température de 20 à 90°C avec précipitation de l'hydroxyde d'aluminium et à la fois durcissement de l'époxyde, on filtre le phosphore stabilisé et on le sèche enfin à température élevée.

6. Procédé selon la revendication 5, caractérisé en ce que l'on utilise comme époxyde une époxyde liquide qui présente une viscosité très faible à moyenne, une réactivité de 100% et est durcissable à l'aide d'un durcissant hydrosoluble ou émulsionnable dans l'eau.

7. Procédé selon la revendication 5, caractérisé en ce que l'on utilise comme époxyde des produits de réaction liquides non-modifiés d'une réactivité de 100% d'épichlorhydrine et de bisphénol A, qui sont durcissables à l'aide de durcissants hydrosolubles ou émulsionnables dans l'eau.

8. Procédé selon la revendication 5, caractérisé en ce que l'on utilise comme époxyde une dispersion aqueuse d'une résine phénol-époxyde ou des esters époxydiques d'une réactivité de 100% émulsionnables dans l'eau et durcissables à l'aide de durcissants hydrosolubles ou émulsionnables dans l'eau.

9. Procédé selon les revendications 5 à 8, caractérisé en ce que l'on utilise comme durcissants des polyamines modifiées internement hydrosolubles ou des polyaminoamides émulsionnables dans l'eau.

10. Procédé selon les revendications 5 à 9, caractérisé en ce que l'on durcit les époxydes en phase aqueuse à une température de 20–90°C dans une gamme de pH de 5 à 9.